# EUROPÄISCHE PATENTANMELDUNG

(11) **EP 4 443 076 A1**
(43) Veröffentlichungstag der Anmeldung: **09.10.2024**
(21) Anmeldenummer: 23166941.7
(22) Anmeldetag: 06.04.2023
(51) Int. Cl.: F25B 21/00, F25B 41/24, F16K 1/00

(54) **VERTEILERVENTILEINRICHTUNG FÜR EINE TEMPERIERVORRICHTUNG, TEMPERIERVORRICHTUNG, VERFAHREN ZUM BETRIEB EINER TEMPERIERVORRICHTUNG UND VERWENDUNG EINER VERTEILERVENTILEINRICHTUNG**

(71) Anmelder: Weiss Technik GmbH, 35447 Reiskirchen (DE)
(72) Erfinder: VIEHMANN, Niklas, 35037 Marburg (DE); VOGEL, Christian, 81925 München (DE)
(74) Vertreter: advotec.

(57) **Zusammenfassung**

Die Erfindung betrifft eine Verteilerventileinrichtung (64) für eine Temperiervorrichtung (58), wobei die Temperiervorrichtung eine Temperiereinrichtung (59) aufweist, wobei die Temperiereinrichtung zumindest ein mit einem Wärmeträgerfluid durchströmbares Temperierelement mit einem magnetisierbaren Material aufweist, wobei die Temperiervorrichtung eine Magnetfeldeinrichtung aufweist, wobei die Temperiereinrichtung in einem Magnetfeld der Magnetfeldeinrichtung zumindest teilweise angeordnet ist, wobei die Magnetfeldeinrichtung relativ zu der Temperiereinrichtung drehbar ist, derart, dass das Magnetfeld an dem Temperierelement zur Veränderung einer Magnetisierung des Materials variierbar ist, wobei das Temperierelement mit dem Wärmeträgerfluid unter thermischer Kontaktierung des Materials durchströmbar ist, wobei die Verteilerventileinrichtung zur auf die Magnetisierung zeitlich abgestimmten Steuerung des Durchströmens des Temperierelements mit dem Wärmeträgerfluid ausgebildet ist, wobei die Verteilerventileinrichtung zumindest ein dem Temperierelement zugeordnetes Ventil (67) aufweist, wobei das Ventil mittels zumindest eines Nockenelements (68) einer Welle (63) mechanisch betätigbar ist.

## Beschreibung

Die Erfindung betrifft eine Verteilerventileinrichtung für eine Temperiervorrichtung, insbesondere magnetokalorische Kühlvorrichtung, wobei die Temperiervorrichtung mit einem Stator und einem relativ zu dem Stator drehbar gelagerten Rotor ausgebildet ist, wobei die Temperiervorrichtung eine Temperiereinrichtung aufweist, wobei die Temperiereinrichtung zumindest ein mit einem Wärmeträgerfluid durchströmbares Temperierelement mit einem magnetisierbaren Material aufweist, wobei die Temperiervorrichtung eine Magnetfeldeinrichtung aufweist, wobei die Temperiereinrichtung in einem Magnetfeld der Magnetfeldeinrichtung zumindest teilweise angeordnet ist, wobei die Magnetfeldeinrichtung relativ zu der Temperiereinrichtung drehbar ist, derart, dass das Magnetfeld an dem Temperierelement zur Veränderung einer Magnetisierung des Materials variierbar ist, wobei infolge einer Erhöhung der Magnetisierung eine Temperatur des Materials erhöhbar und infolge einer Verminderung der Magnetisierung die Temperatur verminderbar ist, wobei das Temperierelement mit dem Wärmeträgerfluid unter thermischer Kontaktierung des Materials zu einer Wärmeabfuhr aus dem Material und/oder zu einer Wärmezufuhr zu dem Material durchströmbar ist, wobei die Verteilerventileinrichtung zur auf die Magnetisierung zeitlich abgestimmten Steuerung des Durchströmens des Temperierelements mit dem Wärmeträgerfluid ausgebildet ist, wobei die Verteilerventileinrichtung zumindest ein dem Temperierelement zugeordnetes Ventil aufweist. Weiter betrifft die Erfindung eine Temperiervorrichtung und ein Verfahren zum Betrieb einer Temperiervorrichtung. Ferner betrifft die Erfindung eine Verwendung einer Verteilerventileinrichtung.

Eine derartige Temperiervorrichtung basiert auf dem magnetokalorischen Effekt, bei dem sich ein magnetisierbares bzw. magnetokalorisches Material erwärmt, wenn es in ein Magnetfeld bewegt wird, und abkühlt, wenn es daraus entfernt wird.

Da stets das magnetisierbare bzw. magnetokalorische Material und das Magnetfeld bzw. eine Magnetfeldeinrichtung der Temperiervorrichtung relativ zueinander bewegt werden müssen, kann zwischen zwei Arten von Temperiervorrichtungen unterschieden werden. So ist eine Temperiervorrichtung bekannt, bei der das Material und die Magnetfeldeinrichtung relativ zueinander linear bewegt werden, und eine Temperiervorrichtung, bei der diese Bewegung rotatorisch ausgeführt wird. Diese Temperiervorrichtung weist dann einen an einer Rotorwelle drehbaren Rotor und einen Stator auf.

Die Temperaturänderung des Materials basiert auf einer durch eine Magnetisierung bzw. Entmagnetisierung des Materials hervorgerufenen Änderung einer thermischen bzw. magnetischen Entropie des Materials. Dieser Effekt kann zum Heizen oder zum Kühlen genutzt werden, wenn das erwärmte bzw. abgekühlte Material mit einer Wärmesenke bzw. Wärmequelle verbunden wird, so dass Wärme aus dem Material abgeführt bzw. zu dem Material zugeführt werden kann. Eine derartige Temperiervorrichtung weist gegenüber einer konventionellen Kühlvorrichtung bzw. Heizvorrichtung einen wesentlich verbesserten Wirkungsgrad auf und ist klimafreundlich, da kein klimaschädliches Kältemittel verwendet werden muss.

Zu einer Wärmeabfuhr aus dem magnetisierten Material bzw. zu einer Wärmezufuhr zu dem entmagnetisierten Material wird das Material mit einem Wärmeträgerfluid in einen thermischen Kontakt gebracht, welches typischerweise durch von dem Material ausgebildete Kanäle geleitet wird bzw. diese durchströmt. Regelmäßig weist die Temperiervorrichtung eine Temperiereinrichtung mit einer Mehrzahl von Temperierelementen auf, welche jeweils ein derartiges Material aufweisen. Durch eine relative Drehung der Temperiereinrichtung und des Magnetfeldes zueinander wird das Magnetfeld an den einzelnen Temperierelementen dann variiert, derart, dass das jeweilige Material alternierend magnetisiert und entmagnetisiert wird und damit verbunden eine alternierende Temperaturerhöhung und Temperaturverminderung erfährt. Zur auf die Magnetisierung des jeweiligen Materials zeitlich abgestimmten Steuerung des Durchströmens der Temperierelemente weist die Temperiervorrichtung üblicherweise eine Verteilerventileinrichtung mit Ventilen auf, wobei jedem Temperierelement zumindest ein Ventil zugeordnet ist, wobei die Ventile einen jeweiligen die Temperierelemente durchgreifenden Fluidweg in Abhängigkeit von der Magnetisierung des jeweiligen Materials derart sperren bzw. öffnen, dass das Wärmeträgerfluid die Temperierelemente bei magnetisiertem Material zu einer Wärmeabfuhr aus dem Material oder bei entmagnetisiertem Material zu einer Wärmezufuhr zu dem Material durchströmt.

Die Ventile sind regelmäßig Magnetventile. Diese verfügen über ausreichend präzise Schalt- und Ansprechzeiten, um die Temperiervorrichtung bzw. ein Fluidsystem der Temperiervorrichtung hinreichend präzise steuern bzw. betreiben zu können. Gleichwohl ist der Einsatz von Magnetventilen aus mehreren Gründen nachteilhaft. So führt eine Wärmeentwicklung in Spulen der Magnetventile zu einem unerwünschten Wärmeeintrag in den Fluidkreislauf. Weiter weisen Magnetventile, vor allem bei einem Betrieb mit höheren Frequenzen, störende Betriebsgeräusche in Gestalt eines "Klackerns" auf. Zudem ist für die Magnetventile stets eine aufwendige elektronische Regelung erforderlich. Letztlich entstehen durch den Einsatz vieler einzelner Ventile vergleichsweise hohe Materialkosten. Die vorgenannten Nachteile verstärken sich mit steigender Anzahl der Temperierelemente bzw. Fluidwege bzw. Ventile. Mit jedem zusätzlichen Magnetventil nimmt der unerwünschte Wärmeeintrag in das Fluidsystem zu. Dieser Nachteil ist als besonders kritisch zu betrachten, da sich eine magnetokalorische Temperiervorrichtung vor allem durch eine gesteigerte Effizienz auszeichnen soll. Ein hoher Wärmeeintrag mindert eine zur Verfügung stehende Kälteleistung und steigert eine erforderliche elektrische Leistungsaufnahme, wodurch die Effizienz der Temperiervorrichtung sinkt.

Bekannt ist zudem eine Verwendung von Drehverteilern. Diese zeichnen sich durch einen abgedichteten Übergang zwischen einem feststehenden Körper und einem rotierenden Körper aus. Durch Öffnungen in den beiden Körpern, die nur bei einem bestimmten Drehwinkel deckungsgleich sind, werden hier Fluidwege geöffnet und geschlossen. Drehverteiler zeigen jedoch Nachteile in der Abdichtung der Fluidwege untereinander, da diese nur flächendichtend realisiert werden kann. Die Reibung zwischen Oberflächen der Körper verursacht darüber hinaus einen Wärmeeintrag in das Wärmeträgerfluid sowie eine erhöhte elektrische Leistungsaufnahme, was ebenfalls zu einer verminderten Effizienz der Temperiervorrichtung führt.

Der vorliegenden Erfindung liegt daher die Aufgabe zugrunde, eine Verteilerventileinrichtung für eine Temperiervorrichtung, eine Temperiervorrichtung, ein Verfahren zum Betrieb einer Temperiervorrichtung und eine Verwendung einer Verteilerventileinrichtung bei einer Temperiervorrichtung vorzuschlagen, welche bzw. welches eine Effizienz der Temperiervorrichtung verbessert.

Diese Aufgabe wird durch eine Verteilerventileinrichtung mit den Merkmalen des Anspruchs 1, eine Temperiervorrichtung mit den Merkmalen des Anspruchs 12, ein Verfahren zum Betrieb einer Temperiervorrichtung mit den Merkmalen des Anspruchs 19 und eine Verwendung einer Verteilerventileinrichtung mit den Merkmalen des Anspruchs 23 gelöst.

Die erfindungsgemäße Verteilerventileinrichtung für eine Temperiervorrichtung, insbesondere magnetokalorische Kühlvorrichtung, wobei die Temperiervorrichtung mit einem Stator und einem relativ zu dem Stator drehbar gelagerten Rotor ausgebildet ist, wobei die Temperiervorrichtung eine Temperiereinrichtung aufweist, wobei die Temperiereinrichtung zumindest ein mit einem Wärmeträgerfluid durchströmbares Temperierelement mit einem magnetisierbaren Material aufweist, wobei die Temperiervorrichtung eine Magnetfeldeinrichtung aufweist, wobei die Temperiereinrichtung in einem Magnetfeld der Magnetfeldeinrichtung zumindest teilweise angeordnet ist, wobei die Magnetfeldeinrichtung relativ zu der Temperiereinrichtung drehbar ist, derart, dass das Magnetfeld an dem Temperierelement zur Veränderung einer Magnetisierung des Materials variierbar ist, wobei infolge einer Erhöhung der Magnetisierung eine Temperatur des Materials erhöhbar und infolge einer Verminderung der Magnetisierung die Temperatur verminderbar ist, wobei das Temperierelement mit dem Wärmeträgerfluid unter thermischer Kontaktierung des Materials zu einer Wärmeabfuhr aus dem Material und/oder zu einer Wärmezufuhr zu dem Material durchströmbar ist, ist zur auf die Magnetisierung zeitlich abgestimmten Steuerung des Durchströmens des Temperierelements mit dem Wärmeträgerfluid ausgebildet, wobei die Verteilerventileinrichtung zumindest ein dem Temperierelement zugeordnetes Ventil aufweist, wobei das Ventil mittels zumindest eines Nockenelements einer Welle mechanisch betätigbar ist.

Durch eine relative Drehung der Temperiereinrichtung und des Magnetfeldes zueinander kann das Magnetfeld an dem Temperierelement bzw. an den einzelnen Temperierelementen, das heißt die magnetische Flussdichte an dem Temperierelement bzw. der das Temperierelement durchsetzende magnetische Fluss, dann variiert werden, derart, dass das Material bzw. jeweilige Material alternierend magnetisiert und entmagnetisiert wird und damit verbunden eine alternierende Temperaturerhöhung und Temperaturverminderung erfährt. Zur auf die Magnetisierung des Materials bzw. jeweiligen Materials zeitlich abgestimmten Steuerung des Durchströmens des Temperierelements bzw. der Temperierelemente weist die Temperiervorrichtung eine Verteilerventileinrichtung mit zumindest einem Ventil bzw. Ventilen auf, wobei dem Temperierelement das Ventil bzw. jedem Temperierelement zumindest ein Ventil zugeordnet ist, wobei das Ventil bzw. die Ventile einen das Temperierelement durchgreifenden Fluidweg bzw. einen jeweiligen die Temperierelemente durchgreifenden Fluidweg in Abhängigkeit von der Magnetisierung des Materials bzw. jeweiligen Materials derart sperrt bzw. sperren bzw. öffnet bzw. öffnen, dass das Wärmeträgerfluid das Temperierelement bzw. die Temperierelemente bei magnetisiertem Material zu einer Wärmeabfuhr aus dem Material, insbesondere von einer Kaltseite des Temperierelements zu einer Warmseite des Temperierelements (nachfolgend auch als Rücklauf bezeichnet), oder bei entmagnetisiertem Material zu einer Wärmezufuhr zu dem Material, insbesondere von der Warmseite zu der Kaltseite (nachfolgend auch als Vorlauf bezeichnet), durchströmen kann. Folglich kann das Temperierelement mit dem Wärmeträgerfluid zu einer Wärmeabfuhr aus dem Material von einer Kaltseite des Temperierelements zu einer Warmseite des Temperierelements und/oder zu einer Wärmezufuhr zu dem Material von der Warmseite zu der Kaltseite durchströmbar sein. Vorteilhafterweise kann die Verteilerventilanordnung zumindest zwei dem Temperierelement zugeordnete Ventile aufweisen, wobei ein erstens Ventil der zwei Ventile den Rücklauf und ein zweites Ventil der zwei Ventile den Vorlauf steuern kann. Erfindungsgemäß ist anstelle eines Magnetventils ein mechanisch betätigbares Ventil vorgesehen, welches dazu ausgebildet ist, mittels eines Nockenelements bzw. einer Nocke einer Welle bzw. Nockenwelle, welche Bestandteil der Temperiervorrichtung bzw. der Verteilerventileinrichtung sein kann, mechanisch betätigt zu werden, wobei das Ventil infolge einer relativen Drehung der Welle bzw. des drehfest mit der Welle verbundenen Nockenelements zu dem Ventil bzw. einem Kolben des Ventils bzw. einem mechanischen Taster bzw. Betätigungselements des Ventils betätigt werden kann. Ein zusätzlicher Wärmeeintrag in insbesondere ein Fluidsystem der Temperiervorrichtung kann so vermieden werden, wodurch die Temperiervorrichtung vergleichsweise effizienter betrieben werden kann. Zudem können durch den Verzicht auf ein Magnetventil und die Verwendung eines mittels einer Nockenwelle mechanisch betätigbaren Ventils störende Betriebsgeräusche verhindert werden. Weiter entfällt die Notwendigkeit einer aufwendigen elektronischen Regelung, welche das Ventil im Falle eines Magnetventils zum Öffnen bzw. Schließen des Ventils ansteuern muss, da das Ventil mittels des Nockenelements mechanisch betätigt werden kann.

Das Nockenelement kann an der Welle angeordnet sein oder von der Welle ausgebildet werden. Weiter kann das Nockenelement eine Mehrzahl von Vorsprüngen bzw. Höckern bzw. Maxima aufweisen bzw. ausbilden, so dass das Ventil bei jeder Umdrehung der Welle einer der Mehrzahl der Vorsprünge entsprechenden Anzahl betätigt werden kann. Die Anzahl der Vorsprünge kann einer Anzahl von je Umdrehung der Magnetfeldeinrichtung an dem Temperierelement auftretenden magnetischen Hochfelder bzw. Maxima des Magnetfeldes für die Steuerung des Rücklaufs oder magnetischen Nullfelder bzw. Minima des Magnetfeldes für die Steuerung des Vorlaufs entsprechen. Die Anzahl der magnetischen Hochfelder bzw. Nullfelder kann insbesondere durch eine Anzahl von Permanentmagneten der Magnetfeldeinrichtung gegeben sein. Zur Steuerung des Rücklaufs bzw. zur gemeinsamen Betätigung der den Rücklauf steuernden Ventile kann die Welle ein erstens Nockenelement und zur Steuerung des Vorlaufs bzw. zur gemeinsamen Betätigung der den Vorlauf steuernden Ventile kann die Welle ein zweites Nockenelement aufweisen. Die Nockenelemente können dann derart an der Welle angeordnet sein, dass die Vorsprünge des ersten Nockenelements relativ zu den Vorsprüngen des zweiten Nockenelements winkelversetzt ausgerichtet sein können, um die Öffnungszeiten für die den Vorlauf steuernden Ventile und die den Rücklauf steuernden Ventile zeitlich aufeinander abzustimmen. Auch kann die Welle eine einer Anzahl der Ventile entsprechende Anzahl von Nockenelementen aufweisen, so dass jedes Ventil mittels eines eigenen Nockenelements betätigt werden kann. Weiter ist es denkbar, dass zwei Nockenwellen vorsehen sind. Eine Nockenwelle kann dann zur Betätigung der den Rücklauf steuernden Ventile und eine weitere Nockenwelle zur Betätigung der den Vorlauf steuernden Ventile dienen.

Die Welle kann eine Rotorwelle sein oder an eine Rotorwelle gekoppelt sein. Dadurch sind Steuerzeiten bzw. Öffnungs- und Schließzeiten der Ventile bzw. Fluidwege direkt proportional zu einer Drehgeschwindigkeit des Rotors, so dass sich die Steuerzeiten jederzeit automatisch und ohne Zeitverzug der Drehgeschwindigkeit des Rotors anpassen, wodurch eine vorteilhafte Beaufschlagung der Fluidwege in jedem Betriebspunkt jederzeit sichergestellt werden kann.

Weiter können die Öffnungszeiten und Schließzeiten der Ventile durch eine Konstruktion der Nockenwelle bzw. des Nockenelements, insbesondere durch eine Form des Nockenelements, und eine Einstellung eines Abstands des Ventils zu dem Nockenelement sowie einer Schaltschwelle bzw. einer Kolbenlänge eines Kolbens des Ventils definiert bzw. optimiert werden.

In einer vorteilhaften Ausführungsform der Erfindung kann die Temperiereinrichtung eine Mehrzahl von Temperierelementen, welche auch als magnetische Regeneratoren verstanden werden können, aufweisen, wobei die Verteilerventileinrichtung eine Mehrzahl von Ventilen aufweisen kann, wobei eine Anzahl der Ventile zumindest einer Anzahl der Temperierelemente entsprechen kann, so dass jedem Temperierelement zumindest ein Ventil der Mehrzahl von Ventilen zugeordnet sein kann. Die Temperiereinrichtung kann dann zwei, drei, vier, fünf, sechs, sieben, acht, neun, zehn, elf, zwölf oder mehr Temperierelemente aufweisen.

Vorteilhafterweise kann die Verteilerventileinrichtung eine, vorzugsweise eine erste Ventilanordnung bildende, Mehrzahl von ersten Ventilen zur Steuerung des Durchströmens zu der Wärmeabfuhr aus dem Material aufweisen, wobei eine Anzahl der ersten Ventile der Anzahl der Temperierelemente entsprechen kann, so dass jedem Temperierelement ein erstes Ventil der Mehrzahl von ersten Ventilen zugeordnet sein kann und/oder kann die Verteilerventileinrichtung eine, vorzugsweise eine zweite Ventilanordnung bildende, Mehrzahl von zweiten Ventilen zur Steuerung des Durchströmens zu der Wärmezufuhr zu dem Material aufweisen, wobei eine Anzahl der zweiten Ventile der Anzahl der Temperierelemente entsprechen kann, so dass jedem Temperierelement ein zweites Ventil der Mehrzahl von zweiten Ventilen zugeordnet sein kann. Insbesondere kann jedem Temperierelement dann genau ein erstens Ventil und genau ein zweites Ventil zugeordnet sein, um den Vorlauf und den Rücklauf durch das Temperierelement zu steuern. Die erste Ventilanordnung kann übereinstimmend mit der zweiten Ventilanordnung ausgebildet sein.

Vorteilhafterweise können die ersten Ventile mittels eines ersten Nockenelements der Welle und die zweiten Ventile mittels eines zweiten Nockenelements der Welle gemeinsam betätigbar sein, wodurch die Verteilerventileinrichtung vereinfacht werden kann.

Vorteilhafterweise kann die erste Ventilanordnung und/oder die zweite Ventilanordnung auf der Kaltseite oder Warmseite angeordnet sein.

Vorteilhafterweise kann die erste Ventilanordnung und die zweite Ventilanordnung modular ausgebildet sein. In diesem Fall ist es besonders einfach eine aus dem Stand der Technik bekannte Temperiervorrichtung auf eine erfindungsgemäße Verteilerventilanordnung umzurüsten.

Vorteilhafterweise können die Ventile bei Anordnung der Verteilerventileinrichtung an der Welle sternförmig um die Welle herum und/oder linear entlang der Welle angeordnet sein. Eine sternförmige Anordnung der Ventile ist besonders platzsparend und erlaubt auf eine einfache Weise eine gemeinsame Betätigung der ersten Ventile mittels des ersten Nockenelements bzw. der zweiten Ventile mittels des zweiten Nockenelements, insbesondere dann, wenn die ersten bzw. zweiten Ventile in einer gemeinsamen Ebene angeordnet sind. Bei einer linearen Anordnung der Ventile kann jedes Ventil mittels eines eigenen Nockenelements betätigt werden.

Vorteilhafterweise kann die Verteilerventileinrichtung zumindest ein das Ventil aufnehmendes Gehäuse aufweisen. Die Verteilerventileinrichtung kann ein erstes Gehäuse zur Aufnahme der ersten Ventile und ein getrennt von dem ersten Gehäuse ausgebildetes zweites Gehäuse zur Aufnahme der zweiten Ventile aufweisen.

Vorteilhafterweise kann das Gehäuse, vorzugsweise axialseitig, einen Fluideinlass für das Wärmeträgerfluid aufweisen. Weiter kann das Gehäuse, vorzugsweise zentral, einen Durchgang aufweisen, in welcher das Nockenelement anordbar bzw. angeordnet sein kann.

Vorteilhafterweise kann das Ventil einen, vorzugsweise senkrecht bzw. quer zu der Welle, vorzugsweise entgegen einer Rückstellkraft eines Federelements des Ventils, bewegbaren Kolben, vorzugsweise mit einer einstellbaren Kolbenlänge, aufweisen. Der Kolben kann in einer Aufnahme des Gehäuses zumindest abschnittsweise geführt sein. Mit einem Ende des Kolbens kann der Kolben in den Durchgang ragen, wobei an dem Ende eine das Nockenelement kontaktierende Laufkugel des Ventils vorgesehen sein kann. Die Kolbenlänge kann beispielsweise über ein Gewinde des Kolbens eingestellt werden. Der Kolben kann einen ersten Abschnitt und einen mit dem ersten Abschnitt über das Gewinde verbundenen zweiten Abschnitt aufweisen, so dass die Kolbenlänge durch eine Drehung des zweiten Abschnitts relativ zu dem ersten Abschnitt eingestellt werden kann. Mit dem zweiten Abschnitt kann der Kolben dann aus der Aufnahme in den Durchgang ragen, wobei an dem zweiten Abschnitt dann auch die Laufkugel vorgesehen sein kann. Durch die Einstellung der Kolbenlänge können die Öffnungs- und Schließzeiten bei Bedarf eingestellt und eine Durchflussmenge ausgelitert werden.

Vorteilhafterweise kann das Ventil einen Ventildeckel aufweisen, welcher einen Fluidauslass für das Wärmeträgerfluid aufweisen kann. Bei einer Betätigung des Ventils kann der Kolben und damit auch ein, insbesondere kragenartiges, Sperrelement des Kolbens derart bewegt werden, dass ein den Fluideinlass und den Fluidauslass durchgreifender Fluidweg für das Wärmeträgerfluid freigegeben werden kann.

Weitere vorteilhafte Ausführungsformen der Verteilerventileinrichtung ergeben sich aus den Merkmalsbeschreibungen der auf den Vorrichtungsanspruch 12 und der auf den Verfahrensanspruch 19 rückbezogenen Unteransprüche.

Die erfindungsgemäße Temperiervorrichtung, insbesondere magnetokalorische Kühlvorrichtung, ist mit einem Stator und einem relativ zu dem Stator drehbar gelagerten Rotor ausgebildet, wobei die Temperiervorrichtung eine Temperiereinrichtung aufweist, wobei die Temperiereinrichtung zumindest ein mit einem Wärmeträgerfluid durchströmbares Temperierelement mit einem magnetisierbaren Material aufweist, wobei die Temperiervorrichtung eine Magnetfeldeinrichtung aufweist, wobei die Temperiereinrichtung in einem Magnetfeld der Magnetfeldeinrichtung zumindest teilweise angeordnet ist, wobei die Magnetfeldeinrichtung relativ zu der Temperiereinrichtung drehbar ist, derart, dass das-Magnetfeld an dem Temperierelement zur Veränderung einer Magnetisierung des Materials variierbar ist, wobei infolge einer Erhöhung der Magnetisierung eine Temperatur des Materials erhöhbar und infolge einer Verminderung der Magnetisierung die Temperatur verminderbar ist, wobei das Temperierelement mit dem Wärmeträgerfluid unter thermischer Kontaktierung des Materials zu einer Wärmeabfuhr aus dem Material und/oder zu einer Wärmezufuhr zu dem Material durchströmbar ist, wobei die Temperiervorrichtung eine erfindungsgemäße Verteilerventileinrichtung aufweist, wobei die Temperiervorrichtung eine Welle mit zumindest einem Nockenelement zur mechanischen Betätigung des zumindest einen Ventils der Verteilerventileinrichtung ausfweist.

Vorteilhafterweise kann der Rotor die Welle umfassen oder die Welle an eine Rotorwelle gekoppelt sein. Demnach kann die Welle eine Rotorwelle sein oder an eine Rotorwelle gekoppelt sein, wodurch die Steuerzeiten der Ventile auf eine einfache Weise mit einem zeitlichen Verlauf des Magnetfelds bzw. der Magnetisierung synchronisiert werden können, wenn der Rotor die Magnetfeldeinrichtung umfasst.

Vorteilhafterweise kann sich das Temperierelement in einer axialen Richtung der Welle erstrecken, wobei das Temperierelement an einem ersten axialen Ende der Temperiereinrichtung bzw. des Temperierelements zumindest einen ersten Anschluss und an einem dem ersten axialen Ende gegenüberliegenden zweiten axialen Ende der Temperiereinrichtung bzw. des Temperierelements zumindest einen zweiten Anschluss aufweisen kann. Das Temperierelement kann auch ein Gehäuse aufweisen, in welchem das magnetisierbare Material angeordnet sein kann. Die Anschlüsse können an dem Gehäuse angeordnet oder von dem Gehäuse ausgebildet werden. Alternativ kann die Temperiereinrichtung dem Temperierelement zugeordnete Anschlüsse aufweisen. Der Fluidweg in dem Temperierelement kann beispielsweise parallel zu der Welle oder alternativ mäanderförmig in der axialen Richtung verlaufen. Ein Querschnitt des Fluidwegs kann so gewählt sein, dass eine möglichst große Wärmemenge von einer Innenfläche des Fluidwegs auf das Wärmeträgerfluid übertragen werden kann. Eine geometrische Ausgestaltung des Fluidwegs kann insbesondere auch an eine mit dem Material erzielbare Temperaturdifferenz und eine Strömungsgeschwindigkeit des Wärmeträgerfluides angepasst sein. So kann dann sichergestellt werden, dass das Wärmeträgerfluid bei einer Passage des Fluidwegs die mit dem magnetokalorischen Material erzielbare Temperaturdifferenz erfährt. Das Temperierelement bzw. die Temperiereinrichtung kann zwei erste Anschlüsse und zwei zweite Anschlüsse aufweisen, welche jeweils als Zulauf und Ablauf auf der Warmseite bzw. Kaltseite dienen können. Über die Anschlüsse kann das Temperierelement bzw. die Temperiereinrichtung dann beispielsweise über Leitungen an die Verteilerventileinrichtung angeschlossen sein.

Vorteilhafterweise kann die Verteilerventileinrichtung, auch ohne Vorhandensein der Anschlüsse, an dem ersten axialen Ende und/oder zweiten axialen Ende angeordnet sein. Die axialen Enden können mit der Kaltseite bzw. Warmseite korrespondieren.

Das Material kann das Temperierelement ausbilden bzw. das Temperierelement kann aus dem Material ausgebildet sein.

Vorteilhafterweise kann das Material Kanäle bzw. Mikrokanäle zur Durchleitung bzw. Durchströmung des Wärmeträgerfluids ausbilden. Das Wärmeträgerfluid kann das Material somit direkt thermisch kontaktieren. In dem Temperierelement können die Kanäle dann den Fluidweg ausbilden. Das Material kann einen Temperierkörper ausbilden, welcher seinerseits die Kanäle ausbilden kann. Die Temperierkörper können durch additive Fertigung, insbesondere Pulverspritzgießen, Metallpulverextrusion oder Laserschmelzen, ausgebildet sein.

Das Temperierelement kann zumindest ein erstes magnetisierbares Material mit einer ersten Curie-Temperatur und ein zweites magnetisierbares Material mit einer zweiten Curie-Temperatur aufweisen. Die Materialien können dann beispielsweise entlang des Fluidwegs in Reihe angeordnet sein, um einen Temperaturbereich innerhalb des Fluidwegs zu erweitern.

Das Material kann eine Materialmischung sein, welche Lanthan (La), Eisen (Fe), Silizium (Si), Cobalt (Co) und/oder weitere Komponenten aufweisen kann. Insbesondere kann das Material eine La(FeSi)₁₃-Legierung sein.

Vorteilhafterweise kann die Temperiervorrichtung ein Fluidsystem aufweisen, wobei das Fluidsystem einen Fluidkreislauf mit einer Fördereinrichtung zur Zirkulation des Wärmeträgerfluids und einen kalten Wärmeübertrager zur Wärmezufuhr zu dem Wärmeträgerfluid und/oder einen warmen Wärmeübertrager zur Wärmeabfuhr von dem Wärmeträgerfluid aufweisen kann. Der Fluidkreislauf kann ein geschlossener Fluidkreislauf sein, der mit beispielsweise Wasser, Ethanol oder Glyzerin als Wärmeträgerfluid gefüllt sein kann. Das Wärmeträgerfluid kann auch ein Kältemittel sein, welches innerhalb der Temperiervorrichtung eine Phasenänderung bzw. einen Phasenwechsel durchläuft. Die Fördereinrichtung kann beispielsweise eine Pumpe oder ein Verdichter sein, der zur Förderung des Wärmeträgerfluides geeignet ist. Der kalte Wärmeübertrager bzw. Wärmetauscher kann auf der Kaltseite angeordnet sein und zur Zuführung von Wärme zu dem Wärmeträgerfluid dienen und der warme Wärmeübertrager bzw. Wärmetauscher kann auf der Warmseite angeordnet sein und zur Abführung von Wärme von dem Wärmeträgerfluid dienen. Die Temperiervorrichtung kann dann als Kühlvorrichtung bzw. Kälteerzeuger und/oder als Heizvorrichtung bzw. Wärmepumpe genutzt werden. Der kalte bzw. heiße Wärmeübertrager kann dann innerhalb des Fluidkreislaufs angeschlossen sein und von dem Fluid durchströmt werden. Die Verteilerventileinrichtung kann zumindest einen Anschluss bzw. Anschlüsse aufweisen, um die Verteilerventileinrichtung an Leitungen des Fluidkreislaufs anzuschließen.

Vorteilhafterweise kann die Temperiervorrichtung eine Antriebsanordnung zur Drehung des Rotors aufweisen. Die Antriebsanordnung kann einen Elektromotor umfassen, der dann mit der Rotorwelle verbunden sein kann. Auch kann der Elektromotor über die Rotorwelle die Pumpe antreiben, die dann an die Rotorwelle gekoppelt sein kann. Eine Rotationsgeschwindigkeit des Rotors kann über eine Regeleinrichtung zur Regelung des Elektromotors geregelt werden.

Vorteilhafterweise kann der Rotor die Magnetfeldeinrichtung und der Stator die Temperiereinrichtung umfassen. Die Magnetfeldeinrichtung kann also Teil des Rotors sein, so dass die Temperiereinrichtung dann an dem Stator ausgebildet sein kann. Der Stator kann dann auch die Verteilerventileinrichtung umfassen. Durch die Drehung des Rotors bzw. der Magnetfeldeinrichtung relativ zu dem Stator bzw. der Temperiereinrichtung kann dann bezogen auf den Stator bzw. die Temperiereinrichtung ein Drehfeld erzeugt werden.

Vorteilhafterweise kann die Temperiereinrichtung als eine Buchse ausgebildet sein, wobei die Magnetfeldeinrichtung relativ zu der Buchse koaxial innerhalb und/oder außerhalb der Buchse angeordnet sein kann, wobei die Magnetfeldeinrichtung durch zumindest einen Permanentmagnet oder Elektromagnet ausgebildet sein kann. Dabei können die Temperierelemente, vorzugsweise in gleichmäßigen Abständen zueinander, über einen Umfang der Buchse verteilt angeordnet sein. Weiter kann die Magnetfeldeinrichtung aus einer Anzahl von Permanentmagneten so zusammengesetzt sein, dass Feldlinien des Magnetfeldes durch die Temperiereinrichtung verlaufen. Die Permanentmagnete können alle gleich bzw. identisch aufgebaut sein. Der Permanentmagnet kann ein Neodym-Magnet sein. Alternativ kann die Magnetfeldeinrichtung durch einen Elektromagneten ausgebildet sein. Beispielsweise kann die Magnetfeldeinrichtung innerhalb der Buchse angeordnet sein, wobei die Buchse von einem Anker aus magnetisierbarem Material, wie Eisen, umgeben sein kann. Alternativ kann auch außerhalb der Buchse bzw. an deren Außenseite eine Magnetfeldeinrichtung angeordnet sein. Der Anker bzw. die Magnetfeldeinrichtung kann so die Buchse umgeben bzw. an dieser angeordnet sein, dass bei einer Relativbewegung von Buchse und Magnetfeldeinrichtung durch Rotation die Buchse bzw. die durch die Buchse verlaufenden Temperierelemente bzw. Fluidwege zumindest abschnittsweise in das Magnetfeld hinein- und herausbewegt werden.

Weitere vorteilhafte Ausführungsformen der Temperiervorrichtung ergeben sich aus den Merkmalsbeschreibungen der auf den Verfahrensanspruch 19 rückbezogenen Unteransprüche.

Bei dem erfindungsgemäßen Verfahren zum Betrieb einer Temperiervorrichtung, insbesondere magnetokalorische Kühlvorrichtung, wird ein Rotor der Temperiervorrichtung relativ zu einem Stator der Temperiervorrichtung gedreht, wobei zumindest ein ein magnetisierbares Material aufweisendes Temperierelement einer Temperiereinrichtung der Temperiervorrichtung mit einem Wärmeträgerfluid durchströmt wird, wobei die Temperiereinrichtung in einem Magnetfeld einer Magnetfeldeinrichtung der Temperiervorrichtung zumindest teilweise angeordnet wird, wobei die Magnetfeldeinrichtung relativ zu der Temperiereinrichtung gedreht wird, derart, dass das Magnetfeld an dem Temperierelement zur Veränderung einer Magnetisierung des Materials variiert wird, wobei infolge einer Erhöhung der Magnetisierung eine Temperatur des Materials erhöht und infolge einer Verminderung der Magnetisierung die Temperatur vermindert wird, wobei das Temperierelement mit dem Wärmeträgerfluid unter thermischer Kontaktierung des Materials zu einer Wärmeabfuhr aus dem Material und/oder zu einer Wärmezufuhr zu dem Material durchströmt wird, wobei das Durchströmen des Temperierelements mit dem Wärmeträgerfluid mittels einer Verteilerventileinrichtung der Temperiervorrichtung auf die Magnetisierung zeitlich abgestimmt gesteuert wird, wobei zumindest ein dem Temperierelement zugeordnetes Ventil der Verteilerventileinrichtung mittels zumindest eines Nockenelements einer Welle der Temperiervorrichtung mechanisch betätigt wird.

Zu den vorteilhaften Wirkungen des erfindungsgemäßen Verfahrens wird auf die Vorteilsbeschreibung der erfindungsgemäßen Verteilerventileinrichtung bzw. der erfindungsgemäßen Temperiervorrichtung verwiesen.

Vorteilhafterweise kann das Ventil durch die Betätigung des Ventils aus einer Sperrstellung des Ventils, in welcher ein das Temperierelement und das Ventil durchgreifender bzw. durch das Ventil und das Temperierelement führender bzw. das Ventil mit dem Temperierelement verbindender Fluidweg für das Wärmeträgerfluid gesperrt ist, in eine Öffnungsstellung des Ventils, in welcher der Fluidweg für das Wärmeträgerfluid geöffnet ist, überführt werden. Mit anderen Worten wird das geschlossene Ventil bzw. der geschlossene Fluidweg durch die Betätigung des Ventils geöffnet. Der Fluidweg kann geöffnet werden, wenn ein Ventilhub bzw. ein Hub eines Kolbens des Ventils eine Schaltschwelle des Ventils überschreitet. Weiter ist es möglich, über eine Einstellung der Schaltschwelle, welche beispielsweise durch eine Einstellung der Kolbenlänge vorgenommen werden kann, die Öffnungszeit bzw. Schließzeit des Ventils anzupassen bzw. optimieren. Beispielsweise kann mit einer reduzierten Schaltschwelle die Öffnungszeit des Ventils vergrößert werden.

Vorteilhafterweise kann mittels des Ventils bzw. ersten Ventils das Durchströmen zu der Wärmeabfuhr aus dem Material gesteuert werden, wobei der Fluidweg vor oder bei einem Erreichen einer maximalen Magnetisierung geöffnet und bei oder nach einem Beginn einer der maximalen Magnetisierung nachfolgenden Verminderung der Magnetisierung für das Wärmeträgerfluid gesperrt werden kann oder kann mittels des Ventils bzw. zweiten Ventils das Durchströmen zu der Wärmezufuhr zu dem Material gesteuert werden, wobei der Fluidweg vor oder bei einem Erreichen einer minimalen Magnetisierung geöffnet und bei oder nach einem Beginn einer der minimalen Magnetisierung nachfolgenden Erhöhung der Magnetisierung für das Wärmeträgerfluid gesperrt werden kann. Einerseits kann das Temperierelement also nur dann durchströmt werden, solange das Material im Wesentlichen vollständig magnetisiert bzw. entmagnetisiert ist. Dies kann durch eine geeignete Anpassung der Schaltschwelle erreicht werden. Andererseits kann durch eine Anpassung der Schaltschwelle der Fluidweg während der Erhöhung und/oder Verminderung der Magnetisierung für das Wärmeträgerfluid geöffnet oder geschlossen werden. Insbesondere kann der Fluidweg auch während der Magnetisierung und Entmagnetisierung geöffnet sein. Die Öffnungszeiten können bis zum Erreichen eines Ericsson-ähnlichen magnetokalorischen Kreislaufs erweitert werden.

Vorteilhafterweise kann das Durchströmen zu der Wärmeabfuhr aus dem Material mittels zumindest eines, vorzugsweise eine erste Ventilanordnung bildenden, dem Temperierelement zugeordneten ersten Ventils der Verteilerventileinrichtung und das Durchströmen zu der Wärmezufuhr zu dem Material mittels zumindest eines, vorzugsweise eine zweite Ventilanordnung bildenden, dem Temperierelement zugeordneten zweiten Ventils der Verteilerventileinrichtung gesteuert werden, wobei das erste Ventil während einer Betätigung des zweiten Ventils nicht betätigt und das zweite Ventil während einer Betätigung des ersten Ventils nicht betätigt werden kann, derart, dass das Temperierelement mit dem Wärmeträgerfluid alternierend zu der Wärmeabfuhr aus dem Material, insbesondere von der Kaltseite zu der Warmseite, und zu der Wärmezufuhr zu dem Material, insbesondere von der Warmseite zu der Kaltseite, durchströmt werden kann. Während sich ein Ventilhub des zweiten bzw. ersten Ventils oberhalb einer Schaltschwelle des zweiten bzw. ersten Ventils befindet, also das zweite bzw. erste Ventil geöffnet ist, ist das erste bzw. zweite Ventil nicht betätigt, das heißt, ein Ventilhub des ersten bzw. zweiten Ventils liegt unterhalb einer Schaltschwelle des ersten bzw. zweiten Ventils, so dass das erste bzw. zweite Ventil geschlossen ist.

Weitere vorteilhafte Ausführungsformen des Verfahrens ergeben sich aus den Merkmalsbeschreibungen der auf den Vorrichtungsanspruch 1 bzw. 12 rückbezogenen Unteransprüche.

Erfindungsgemäß wird eine Verteilerventileinrichtung zur auf eine Magnetisierung eines magnetisierbaren Materials zumindest eines Temperierelements einer Temperiereinrichtung einer Temperiervorrichtung, insbesondere magnetokalorische Kühlvorrichtung, zeitlich abgestimmten Steuerung eines Durchströmens des Temperierelements mit einem Wärmeträgerfluid verwendet, wobei die Temperiervorrichtung mit einem Stator und einem relativ zu dem Stator drehbar gelagerten Rotor ausgebildet ist, wobei die Temperiervorrichtung eine Magnetfeldeinrichtung aufweist, wobei die Temperiereinrichtung in einem Magnetfeld der Magnetfeldeinrichtung zumindest teilweise angeordnet ist, wobei die Magnetfeldeinrichtung relativ zu der Temperiereinrichtung drehbar ist, derart, dass das Magnetfeld an dem Temperierelement zur Veränderung der Magnetisierung variierbar ist, wobei infolge einer Erhöhung der Magnetisierung eine Temperatur des Materials erhöhbar und infolge einer Verminderung der Magnetisierung die Temperatur verminderbar ist, wobei das Temperierelement mit dem Wärmeträgerfluid unter thermischer Kontaktierung des Materials zu einer Wärmeabfuhr aus dem Material und/oder zu einer Wärmezufuhr zu dem Material durchströmbar ist, wobei die Verteilerventileinrichtung zumindest ein dem Temperierelement zugeordnetes Ventil aufweist, wobei das Ventil mittels zumindest eines Nockenelements einer Welle mechanisch betätigbar ist.

Zu den vorteilhaften Wirkungen der erfindungsgemäßen Verwendung wird auf die Vorteilsbeschreibung der erfindungsgemäßen Verteilerventileinrichtung bzw. der erfindungsgemäßen Temperiervorrichtung verwiesen.

Weitere vorteilhafte Ausführungsformen der Verwendung ergeben sich aus den Merkmalsbeschreibungen der auf den Vorrichtungsanspruch 1 bzw. 12 und der auf den Verfahrensanspruch 19 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine schematische Darstellung einer Temperiervorrichtung in einer perspektivischen Ansicht;
- **Fig. 2**: eine Teildarstellung der Temperiervorrichtung aus **Fig. 1****;**
- **Fig. 3**: eine Prinzipdarstellung einer Verteilerventileinrichtung und eines Fluidsystems einer Temperiervorrichtung;
- **Fig. 4**: eine Teildarstellung einer Temperiervorrichtung mit einer abschnittsweise gezeigten Verteilerventileinrichtung in einer perspektivischen Ansicht;
- **Fig. 5**: eine Teildarstellung der in der **Fig. 4** gezeigten Verteilerventileinrichtung in einer Aufsicht;
- **Fig. 6**: eine graphische Darstellung einer Ventilerhebungskurve eines einzelnen Ventils;
- **Fig. 7**: eine graphische Darstellung von Ventilerhebungskurven eines einen Vorlauf steuernden Ventils und eines einen Rücklauf steuernden Ventils bei einer Schaltschwelle mit einem überlagerten Verlauf eines Magnetfeldes;
- **Fig. 8**: eine graphische Darstellung von Ventilerhebungskurven eines einen Vorlauf steuernden Ventils und eines einen Rücklauf steuernden Ventils bei einer angepassten Schaltschwelle mit einem überlagerten Verlauf eines Magnetfeldes;
- **Fig. 9**: eine Teildarstellung einer Verteilerventileinrichtung in einer weiteren Ausführungsform in einer perspektivischen Ansicht;
- **Fig. 10**: eine Schnittdarstellung der in der **Fig. 9** gezeigten Verteilerventileinrichtung.

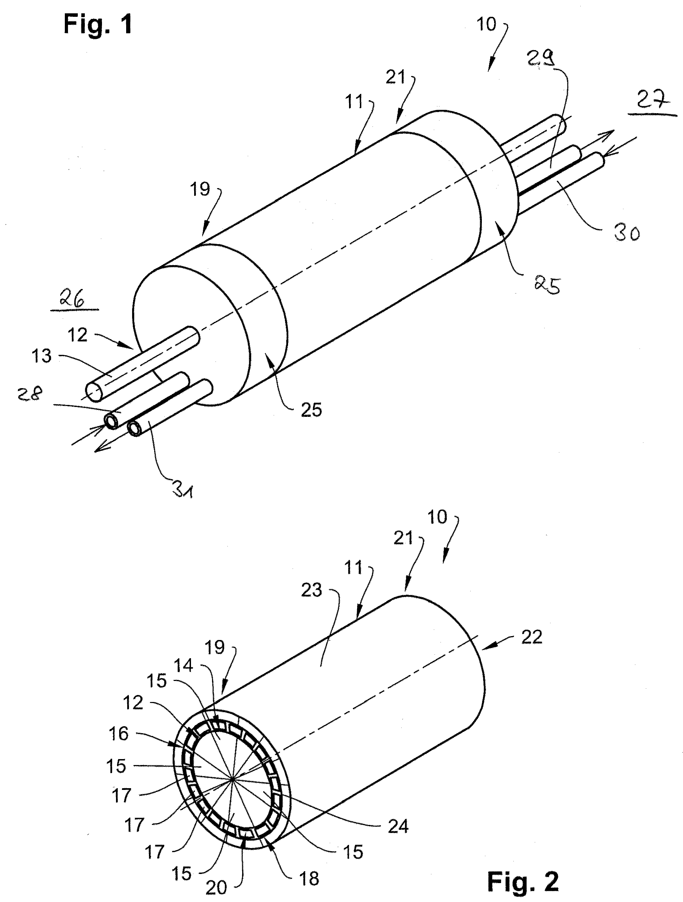

Die **Fig. 1** zeigt eine schematische Darstellung einer Temperiervorrichtung 10 und die **Fig. 2** eine abschnittsweise Darstellung dieser Temperiervorrichtung 10. Die Temperiervorrichtung 10 ist mit einem Stator 11 und einem relativ zu dem Stator 11 drehbaren Rotor 12, welcher eine Rotorwelle 13 aufweist, ausgebildet. Der Rotor 12 weist eine Magnetfeldeinrichtung 14 auf, die aus Permanentmagneten 15 ausgebildet ist, auf. Der Stator 11 ist mit einer Temperiereinrichtung 16 ausgebildet, wobei die Temperiereinrichtung 16 mit einem Wärmeträgerfluid durchströmbare Temperierelemente 17 aufweist. Die Temperiereinrichtung 16 ist als eine Buchse 18 ausgebildet und die Temperierelemente 17 verlaufen innerhalb der Buchse 18 parallel zu der Welle 13. Die Temperierelemente 17 weisen an einem axialen Ende 19 der Buchse 18 jeweils eine Öffnung 20 und an einem dem axialen Ende 19 gegenüberliegenden axialen Ende 21 jeweils eine Öffnung 22 für das Wärmeträgerfluid auf. Weiter weisen die Temperierelemente 17 jeweils ein hier nicht dargestelltes magnetisierbares bzw. magnetokalorisches Material auf, welches einem hier nicht sichtbaren Magnetfeld der Magnetfeldeinrichtung 14 bzw. einem durch eine Drehung des Rotors 12 erzeugten Drehfeld ausgesetzt werden kann. Das Magnetfeld kann demnach an den Temperierelementen 17 durch die Drehung des Rotors 12 bzw. der Permanentmagnete 15 variiert werden. Die Temperierelemente können auch aus dem magnetisierbaren Material ausgebildet sein. Die Temperiereinrichtung 16 ist weiter mit einem hülsenförmigen Anker 23 umgeben, der aus einem magnetisierbaren Material, wie beispielsweise Eisen, besteht. Zwischen dem Rotor 12 und dem Stator 11 ist ein Spalt 24 ausgebildet.

An den axialen Enden 19 und 21 weist die Temperiervorrichtung 10 bzw. der Stator 11 eine erfindungsgemäße Verteilerventileinrichtung 25 auf. Über hier nicht gezeigte Ventile der Verteilerventileinrichtung 25 wird ein Durchfluss des Wärmeträgerfluides durch die Temperierelemente 17 gesteuert. Bei einer Bewegung der Temperierelemente 17 in das Magnetfeld durch eine Drehung der Permanentmagnete 15 relativ zu den Temperierelementen 17 erfolgt eine Erwärmung des Materials der Temperierelemente 17, wobei dann die betreffenden Temperierelemente 17 von dem Wärmeträgerfluid von einer Kaltseite 26 der Temperierelemente 17 zu einer Warmseite 27 der Temperierelemente 17 durchströmt werden. Bei einer Bewegung der Temperierelemente 17 aus dem Magnetfeld heraus durch eine Drehung der Permanentmagnete 15 relativ zu den Temperierelementen 17 erfolgt eine Abkühlung des Materials der Temperierelemente 17, wobei dann die betreffenden Temperierelemente 17 von dem Wärmeträgerfluid von der Warmseite 27 zu der Kaltseite 26 durchströmt werden.

An der Verteilerventileinrichtung 25 ist auf der Kaltseite 26 ein Anschluss 28 für zulaufendes, warmes Wärmeträgerfluid ausgebildet, wobei das dann in der Temperiereinrichtung 16 weiter erwärmte Wärmeträgerfluid über einen Anschluss 29 der Verteilerventileinrichtung 25 auf der Warmseite 27 wieder abgeleitet und einem hier nicht dargestellten warmen Wärmeübertrager der Temperiervorrichtung 10 zugeführt wird. In dem warmen Wärmeübertrager wird das Wärmeträgerfluid wieder abgekühlt und über einen Anschluss 30 an der Verteilerventileinrichtung 25 auf der Warmseite 27 zurück in die Temperiereinrichtung 16 eingeleitet. Nach einer in der Temperiereinrichtung 16 erfolgten Abkühlung wird das Wärmeträgerfluid aus einem Anschluss 31 der Verteilerventileinrichtung 25 auf der Kaltseite 26 wieder ausgeleitet und einem hier nicht dargestellten kalten Wärmeübertrager der Temperiervorrichtung 10 zugeführt. In dem kalten Wärmeübertrager wird das Wärmeträgerfluid wieder erwärmt und über den Anschluss 28 zurück in die Temperiereinrichtung 16 eingeleitet.

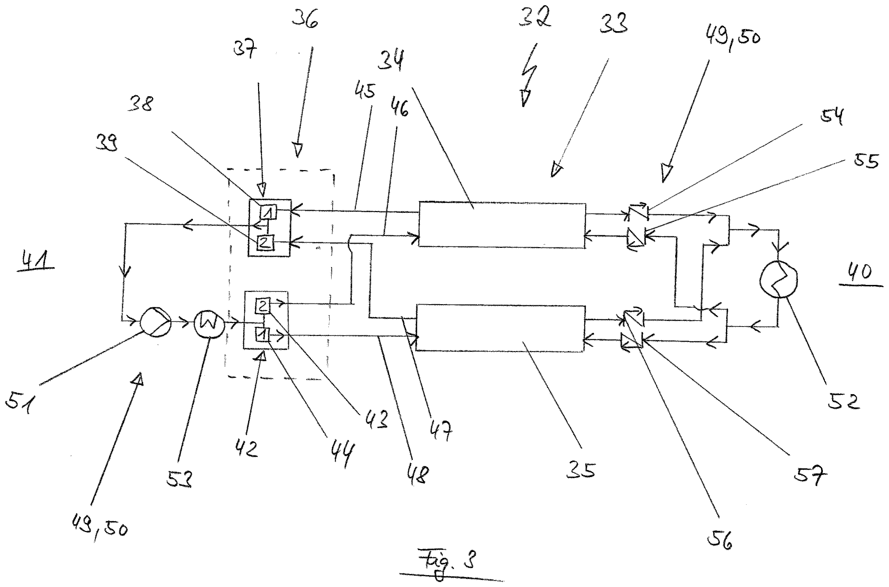

Die **Fig. 3** zeigt eine vereinfachte Darstellung eines Fluidflusses bei einer Temperiervorrichtung 32, welche eine Temperiereinrichtung 33 mit zwei Temperierelementen 34, 35 aufweist. Weiter weist die Temperiervorrichtung 32 eine Verteilerventileinrichtung 36 mit einer ersten Ventilanordnung 37 mit zwei ersten Ventilen 38, 39 zur Steuerung eines Durchströmens der Temperierelemente 34, 35 mit einem Wärmeträgerfluid von einer Kaltseite 40 der Temperierelemente 34, 35 zu einer Warmseite 41 der Temperierelemente 34, 35 und einer zweiten Ventilanordnung 42 mit zwei zweiten Ventilen 43, 44 zur Steuerung des Durchströmens der Temperierelemente 34, 35 mit dem Wärmeträgerfluid von der Warmseite 41 zu der Kaltseite 40 auf. Das erste Ventil 38 und das zweite Ventil 43 sind dem Temperierelement 34 zugeordnet, während das erste Ventil 39 und das zweite Ventil 44 dem Temperierelement 35 zugeordnet sind. Die Verteilerventileinrichtung 36 ist auf der Warmseite 41 angeordnet. Je nach Betätigung der Ventile 38, 39, 43, 44 bzw. Schaltstellung "1" bzw. "2" der Ventilanordnungen 37, 42 werden die Temperierelemente 34, 35 unter Freigabe von die Ventile 38, 39, 43, 44 und die Temperierelemente 34, 35 durchgreifenden Fluidwegen 45, 46, 47, 48, welche innerhalb der Temperierelemente 34, 35 für den Vorlauf und den Rücklauf zusammenfallen können, von unterschiedlichen Seiten durchströmt. In der Schaltstellung "1" bzw. "2" wird das Temperierelement 34 von der Kaltseite 40 bzw. Warmseite 41 zu der Warmseite 41 bzw. Kaltseite 40 und das Temperierelement 35 von der Warmseite 41 bzw. Kaltseite 40 zu der Kaltseite 40 bzw. Warmseite 41 durchströmt. Ferner weist die Temperiervorrichtung 32 ein Fluidsystem 49 auf, welches einen Fluidkreislauf 50 mit einer Fördereinrichtung 51 zur Zirkulation des Wärmeträgerfluids, einen kalten Wärmeübertrager 52 und einen warmen Wärmeübertrager 53 aufweist. Zudem weist das Fluidsystem auf der Kaltseite 40 Rückschlagventile 54, 55, 56, 57 auf, welche jedoch auch entfallen können.

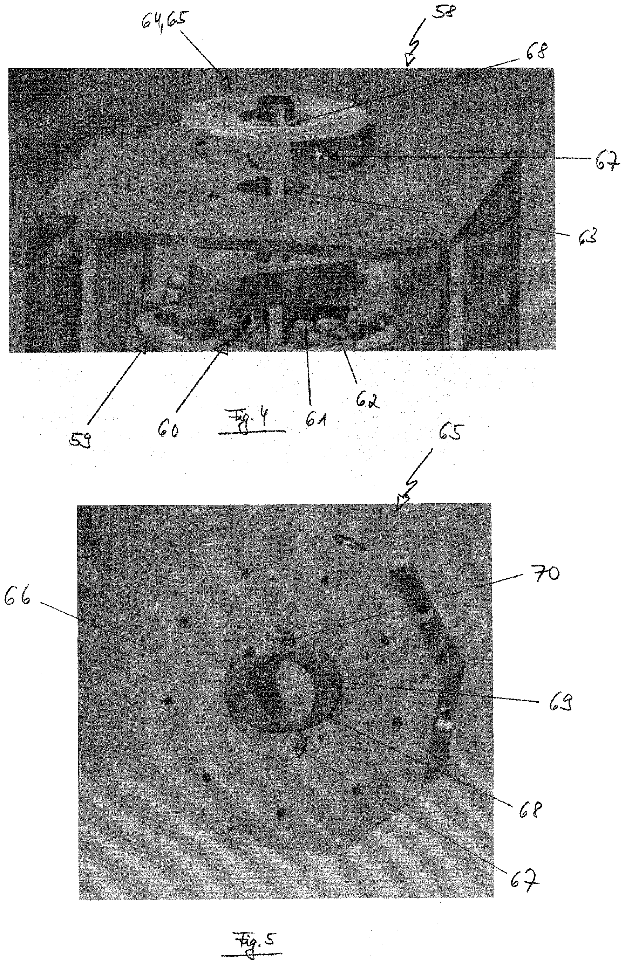

Die **Fig. 4** zeigt eine abschnittsweise Darstellung einer Temperiervorrichtung 58 mit einer Temperiereinrichtung 59 mit vorliegend neun Temperierelementen, von der bzw. von denen hier im Wesentlichen nur Anschlüsse 60 zu sehen sind, welche als Zulauf 61 und Ablauf 62 für ein Wärmeträgerfluid dienen. Weiter weist die Temperiervorrichtung 58 einen Rotor auf, von dem hier nur eine Rotorwelle 63 zu sehen ist, an welcher in einer axialen Richtung der Rotorwelle 63 betrachtet benachbart bzw. endseitig der Temperiereinrichtung 59 eine Verteilerventileinrichtung 64 angeordnet ist, von der hier nur eine erste Ventilanordnung 65 mit neun in einem ersten Gehäuse 66 der ersten Ventilanordnung 65 in einer gemeinsamen Ebene sternförmig um die Rotorwelle 63 herum angeordneten ersten Ventilen 67 zu sehen ist. Die Rotorwelle 63 weist ein Nockenelement 68 zur mechanischen Betätigung der ersten Ventile 67 auf. Damit fungiert die Rotorwelle 63 gleichzeitig als Nockenwelle. Die Anschlüsse 60 können mit hier nicht gezeigten Fluideinlässen bzw. Fluidauslässen der Verteilerventileinrichtung 64 bzw. der ersten Ventilanordnung 65, beispielsweise über Fluidleitungen, verbunden sein.

Die **Fig. 5** zeigt die erste Ventilanordnung 65 einzeln von oben. Dargestellt ist ebenfalls das Nockenelement 68, welches auf zwei gegenüberliegenden Seiten des Nockenelements 68 jeweils einen Höcker 69 ausbildet. Bei einer Drehung des drehfest mit der Rotorwelle 63 verbundenen Nockenelements 68 können die Höcker 69 Kolben 70 der ersten Ventile 67 in dem ersten Gehäuse 66 bezogen auf die Rotorwelle 63 radial nach außen bewegen, wobei die ersten Ventile 67 bei einem Erreichen eines durch eine jeweilige Schaltschwelle der ersten Ventile 67 definierten Ventilhubs einen von dem jeweiligen ersten Ventil 67 gesperrten Fluidweg freigeben können. Eine zweite Ventilanordnung der Verteilerventileinrichtung 64 kann entsprechend der ersten Ventilanordnung 65 ausgebildet sein, wobei zweite Ventile der zweiten Ventilanordnung mittels eines an der Rotorwelle 63 angeordneten weiteren Nockenelements betätigt werden können.

Durch die Anordnung des Nockenelements 68 an der Rotorwelle 63 ändert sich dessen Drehzahl auf gleiche Weise, wodurch sich eine Steuerzeit der ersten Ventile 67 im gleichen Maße ändert. Dieser Zusammenhang zwischen der Drehzahl der Rotorwelle 63, der Drehzahl des Nockenelements 68 und der Steuerzeit der ersten Ventile 67 gewährleistet jederzeit eine proportionale Änderung der Öffnungszeiten der ersten Ventile 67. Entsprechendes gilt für die zweite Ventilanordnung.

Bei einer fehlenden Synchronisierung von Öffnungszeiten der ersten Ventile 67 und magnetischen Hochfeldern bzw. Nullfeldern kann das Nockenelement 68 auf der Rotorwelle 63 rotiert werden, was zu einer Verschiebung einer Ventilerhebungskurve führt (Phasenverschiebung). Entsprechendes gilt für die zweite Ventilanordnung.

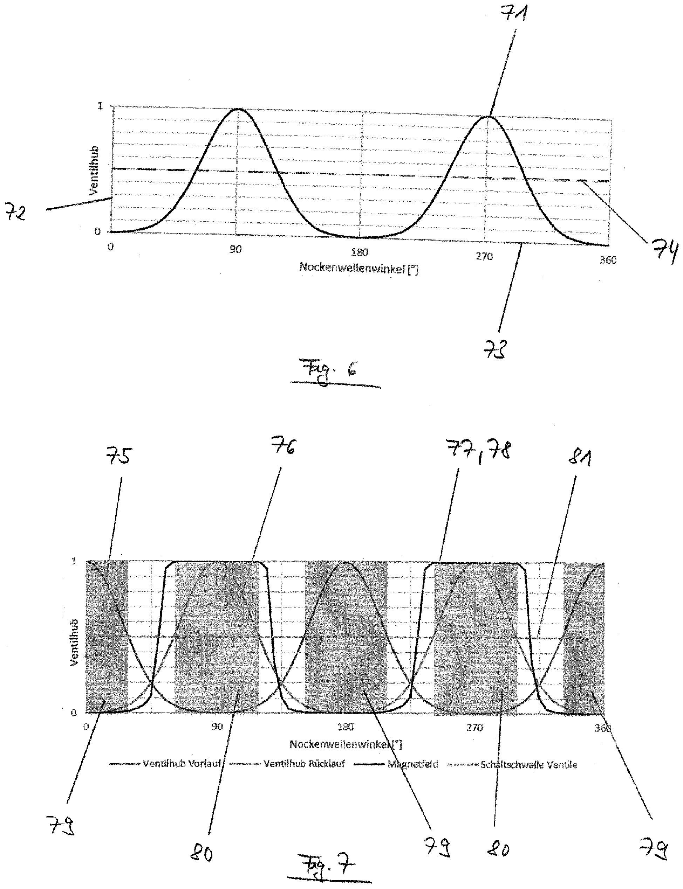

Die **Fig. 6** zeigt eine graphische Darstellung einer Ventilerhebungskurve 71 eines einzelnen Ventils einer Ventilanordnung bei einer Verwendung eines Nockenelements, welches auf zwei gegenüberliegenden Seiten des Nockenelements jeweils einen Höcker ausbildet. Auf einer Ordinate 72 ist ein Ventilhub des Ventils aufgetragen. Da die **Fig. 2** lediglich eine Prinzipdarstellung ist, ist der Ventilhub als eine dimensionslose Zahl dargestellt. Auf einer Abszisse 73 ist ein Nockenwellenwinkel in ° aufgetragen. Bei einem Ventilhub von "0" liegt kein Ventilhub vor, während bei einem Ventilhub von "1" ein maximaler Ventilhub erreicht ist. Befindet sich der Ventilhub unterhalb einer Schaltschwelle 74 des Ventils ist das Ventil nicht betätigt bzw. geschlossen bzw. ein insbesondere das Ventil durchgreifender Fluidweg ist geschlossen. Das Ventil ist betätigt bzw. geöffnet bzw. ein insbesondere das Ventil durchgreifender Fluidweg ist geöffnet, wenn sich der Ventilhub oberhalb der Schaltschwelle 74 befindet.

Die **Fig. 7** zeigt Ventilerhebungskurven 75, 76 von zwei einem Temperierelement zugeordneten, einen Vorlauf bzw. Rücklauf steuernden Ventilen sowie dazu überlagert einen Verlauf 77 eines Magnetfelds an dem Temperierelement. Aufgetragen ist wie in der **Fig. 6** ein Ventilhub gegen einen Nockenwellenwinkel. Die **Fig. 7** veranschaulicht eine Synchronisation der Ventilsteuerung mit Betriebsphasen der Temperiervorrichtung. Die vorliegende Darstellung bezieht sich auf eine Temperiervorrichtung mit zwei magnetischen Hochfeldern 78 sowie zwei gegenüberliegenden Höckern auf einem Nockenelement. Öffnungszeiten der Ventile, zu denen ein Durchströmen des Temperierelements für den Vorlauf bzw. Rücklauf stattfindet sind durch Bereiche 79, 80 gekennzeichnet. Das hier beschriebene Prinzip lässt sich auch auf Temperiervorrichtungen mit mehreren oder weniger magnetischen Hochfeldern bzw. Höckern übertragen.

Auf ein anfängliches magnetisches Nullfeld bei 0° folgt ein Aufbau des Magnetfeldes und damit verbunden eine Magnetisierung eines magnetisierbaren bzw. magnetokalorischen Materials des Temperierelements. Zugleich beginnt ein Ventilhub des Ventils, das den Rücklauf steuert, zuzunehmen. Sobald der Ventilhub eine Schaltschwelle 81 des Ventils überschreitet, öffnet das Ventil einen das Temperierelement durchgreifenden Fluidweg für den Rücklauf. In dem vorliegenden Beispiel ist die Schaltschwelle 81 derartig ausgelegt, dass das Ventil bei Erreichen eines maximalen Magnetfeldes bzw. Hochfeldes 78 öffnet. Das Ventil bleibt während des maximalen Magnetfeldes bei einem oberhalb der Schaltschwelle befindlichen Ventilhub betätigt und der Fluidweg für den Rücklauf geöffnet. Das Ventil zur Steuerung des Vorlaufs durchläuft im gleichen Zeitraum einen minimalen Ventilhub.

Das Ventil des Rücklaufs schließt vor einem Abbau des Magnetfeldes und einer damit verbundenen Entmagnetisierung des magnetokalorischen Materials bei ca. 120°. Der Fluidweg ist während der folgenden Entmagnetisierung geschlossen.

Bei einem Erreichen des minimalen Magnetfeldes bei ca. 150° überschreitet der Ventilhub des den Vorlauf steuernden Ventils die Schaltschwelle 81 und öffnet den Fluidweg für den Vorlauf. Das den Vorlauf steuernde Ventil bleibt während des minimalen Magnetfeldes bei einem oberhalb der Schaltschwelle befindlichen Ventilhub betätigt. Es schließt vor einem erneuten Aufbau des Magnetfeldes bei ca. 210°.

Der beschriebene Vorgang wiederholt sich, so dass mit einer einzelnen Drehung der Nockenwelle um 360° das Ventil des Vorlaufs und das des Rücklaufs entsprechend der Anzahl der magnetischen Hochfelder je zweimal betätigt werden.

Über eine einstellbare Kolbenlänge in jedem Ventil kann die Schaltschwelle 81 angepasst und die Öffnungs- und Schließzeiten der Ventile optimiert werden.

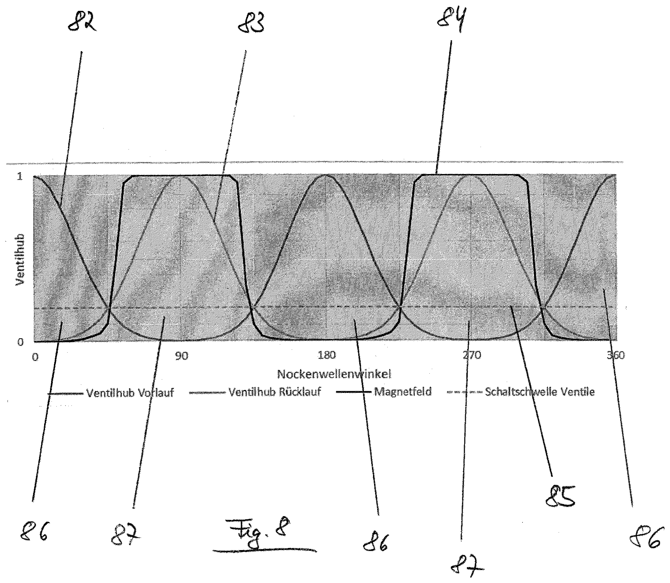

Die **Fig. 8** zeigt, ähnlich zu der **Fig. 7****,** Ventilerhebungskurven 82, 83 von einen Vorlauf bzw. Rücklauf steuernden Ventilen sowie dazu überlagert einen Verlauf 84 eines Magnetfeldes, jedoch mit einer angepassten bzw. reduzierten Schaltschwelle 85. Es ist zu erkennen, dass mit reduzierter Schaltschwelle die Öffnungszeiten der Ventile, zu denen ein Durchströmen des Temperierelements für den Vorlauf bzw. Rücklauf stattfindet und welche durch Bereiche 86, 87 gekennzeichnet sind, zunehmen. Die Öffnungszeiten können so bis zum Erreichen eines Ericsson-ähnlichen magnetokalorischen Kreislaufes erweitert werden.

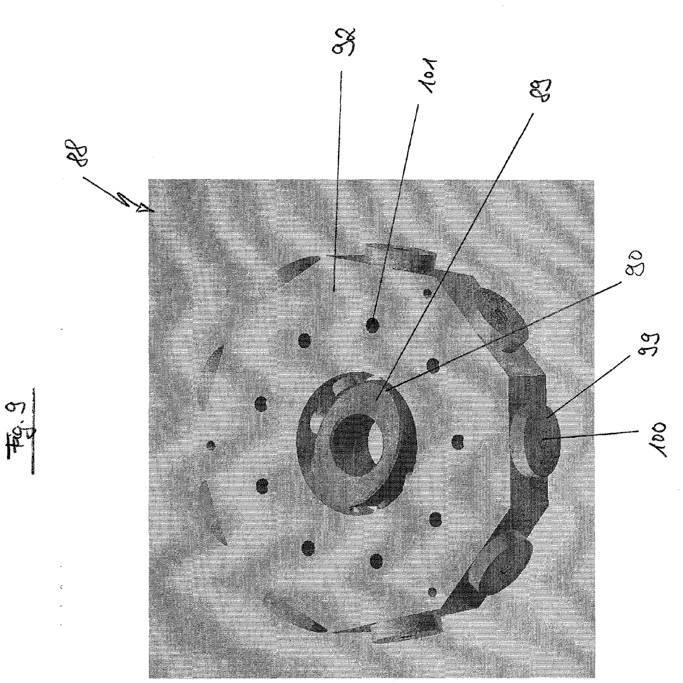

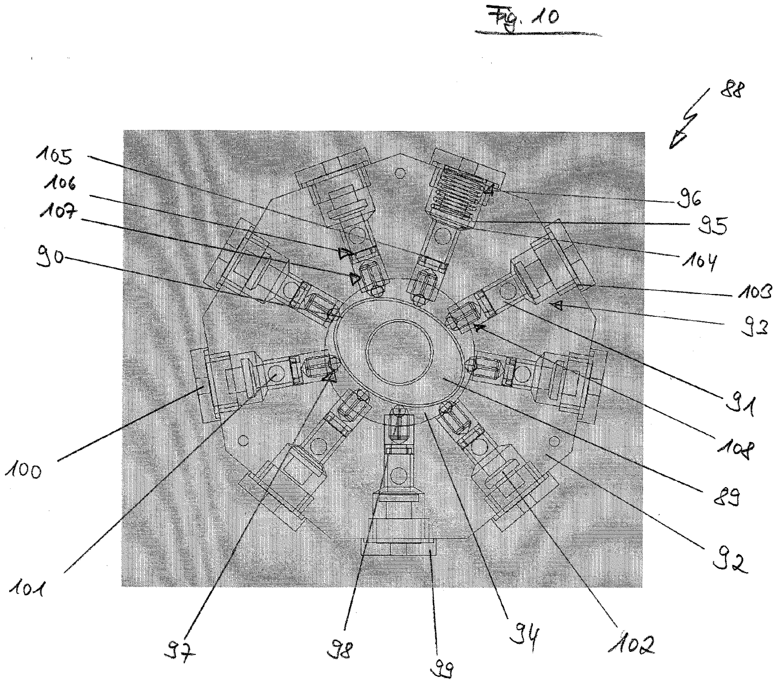

Eine Zusammenschau der **Fig. 9** und **10** zeigt eine Teildarstellung einer Verteilerventileinrichtung. Konkret ist aus den **Fig. 9** und **10** eine erste Ventilanordnung 88 ersichtlich, wobei etwaige zweite Ventilanordnung übereinstimmend mit der ersten Ventilanordnung 88 ausgebildet sein kann. Dargestellt ist ebenfalls ein Nockenelement 89, welches auf zwei gegenüberliegenden Seiten des Nockenelements 89 jeweils einen Höcker 90 ausbildet. Bei einer Drehung des drehfest mit einer hier nicht gezeigten Welle verbundenen Nockenelements 89 können die Höcker 90 Kolben 91 von in einem Gehäuse 92 der Verteilerventileinrichtung bzw. der ersten Ventilanordnung 88 aufgenommenen ersten Ventilen 93 der Verteilerventileinrichtung bzw. der ersten Ventilanordnung 88 in dem Gehäuse 92 bezogen auf die Welle bzw. auf das in einem zentralen Durchgang 94 des Gehäuses 92 angeordnete Nockenelement 89 radial nach außen bewegen, wobei die ersten Ventile 93 bei einem Erreichen eines durch eine jeweilige Schaltschwelle der ersten Ventile 93 definierten Ventilhubs einen von dem jeweiligen ersten Ventil 93 gesperrten Fluidweg freigeben können.

Vorliegend weist die Verteilerventileinrichtung bzw. die erste Ventilanordnung 88 neun erste Ventile 93 auf, welche in einer gemeinsamen Ebene sternförmig um die Welle bzw. den Durchgang 94 angeordnet sind.

Das neuneckige Gehäuse 92 weist für jedes erste Ventil 93 eine Aufnahme 95 auf, in welcher der jeweilige Kolben 91 abschnittsweise, senkrecht bzw. quer zu einer axialen Richtung der Welle und entgegen einer Rückstellkraft eines jeweiligen Federelements 96 der Ventile 93 bewegbar geführt ist. Jeder Kolben 91 ragt mit einem Ende 97 des Kolbens 91, an welchem jeweils eine das Nockenelement 89 kontaktierende Laufkugel 98 des jeweiligen ersten Ventils 93 vorgesehen ist, in den Durchgang 94. Weiter weist jedes erste Ventil 93 einen radialseitig an dem Gehäuse 92 angeordneten Ventildeckel 99 auf, welcher jeweils einen Fluidauslass 100 für das Wärmeträgerfluid aufweist. Zudem weist das Gehäuse 92 axialseitig für jedes erste Ventil 93 einen Fluideinlass 101 für das Wärmeträgerfluid auf. Wird das erste Ventil 93 betätigt, so wird der Kolben 91 und damit auch ein kragenartiges Sperrelement 102 des Kolbens 91 radial nach außen bewegt, wodurch ein insbesondere den Fluidauslass 100 und den Fluideinlass 101 durchgreifender Fluidweg freigegeben wird. Weiter sind Dichtungen 103, 104, 105 ersichtlich. Der Kolben 91 weist einen ersten Abschnitt 106 und einen mit dem ersten Abschnitt 106 über ein Gewinde 108 des Kolbens 91 verbundenen zweiten Abschnitt 107 auf, so dass eine Kolbenlänge durch eine Drehung des zweiten Abschnitts 107 relativ zu dem ersten Abschnitt 106 eingestellt werden kann, was eine Einstellung von Steuerzeiten der ersten Ventile 93 erlaubt.

## Patentansprüche

1. Verteilerventileinrichtung (25, 36, 64) für eine Temperiervorrichtung (10, 32, 58), insbesondere magnetokalorische Kühlvorrichtung, wobei die Temperiervorrichtung mit einem Stator (11) und einem relativ zu dem Stator drehbar gelagerten Rotor (12) ausgebildet ist, wobei die Temperiervorrichtung eine Temperiereinrichtung (16, 33, 59) aufweist, wobei die Temperiereinrichtung zumindest ein mit einem Wärmeträgerfluid durchströmbares Temperierelement (17, 34, 35) mit einem magnetisierbaren Material aufweist, wobei die Temperiervorrichtung eine Magnetfeldeinrichtung (14) aufweist, wobei die Temperiereinrichtung in einem Magnetfeld der Magnetfeldeinrichtung zumindest teilweise angeordnet ist, wobei die Magnetfeldeinrichtung relativ zu der Temperiereinrichtung drehbar ist, derart, dass das Magnetfeld an dem Temperierelement zur Veränderung einer Magnetisierung des Materials variierbar ist, wobei infolge einer Erhöhung der Magnetisierung eine Temperatur des Materials erhöhbar und infolge einer Verminderung der Magnetisierung die Temperatur verminderbar ist, wobei das Temperierelement mit dem Wärmeträgerfluid unter thermischer Kontaktierung des Materials zu einer Wärmeabfuhr aus dem Material und/oder zu einer Wärmezufuhr zu dem Material durchströmbar ist, wobei die Verteilerventileinrichtung zur auf die Magnetisierung zeitlich abgestimmten Steuerung des Durchströmens des Temperierelements mit dem Wärmeträgerfluid ausgebildet ist, wobei die Verteilerventileinrichtung zumindest ein dem Temperierelement zugeordnetes Ventil (38, 39, 43, 44, 67, 93) aufweist,
**dadurch gekennzeichnet,**
**dass** das Ventil mittels zumindest eines Nockenelements (68, 63, 89) einer Welle mechanisch betätigbar ist.

2. Verteilerventileinrichtung nach Anspruch 1,
**dadurch gekennzeichnet,**
**dass** die Temperiereinrichtung (16, 33, 59) eine Mehrzahl von Temperierelementen (17, 34, 35) aufweist, wobei die Verteilerventileinrichtung (25, 36, 64) eine Mehrzahl von Ventilen (38, 39, 43, 44, 67, 93) aufweist, wobei eine Anzahl der Ventile zumindest einer Anzahl der Temperierelemente entspricht, so dass jedem Temperierelement zumindest ein Ventil der Mehrzahl von Ventilen zugeordnet ist.

3. Verteilerventileinrichtung nach Anspruch 2,
**dadurch gekennzeichnet,**
**dass** die Verteilerventileinrichtung (25, 36, 64) eine, vorzugsweise eine erste Ventilanordnung (37, 65, 88) bildende, Mehrzahl von ersten Ventilen (38, 39, 67, 93) zur Steuerung des Durchströmens zu der Wärmeabfuhr aus dem Material aufweist, wobei eine Anzahl der ersten Ventile der Anzahl der Temperierelemente (17, 34, 35) entspricht, so dass jedem Temperierelement ein erstes Ventil der Mehrzahl von ersten Ventilen zugeordnet ist und/oder dass die Verteilerventileinrichtung eine, vorzugsweise eine zweite Ventilanordnung (42) bildende, Mehrzahl von zweiten Ventilen (43, 44) zur Steuerung des Durchströmens zu der Wärmezufuhr zu dem Material aufweist, wobei eine Anzahl der zweiten Ventile der Anzahl der Temperierelemente entspricht, so dass jedem Temperierelement ein zweites Ventil der Mehrzahl von zweiten Ventilen zugeordnet ist.

4. Verteilerventileinrichtung nach Anspruch 3,
**dadurch gekennzeichnet,**
**dass** die ersten Ventile (38, 39, 67, 93) mittels eines ersten Nockenelements (68, 89) der Welle (63) und die zweiten Ventile (43, 44) mittels eines zweiten Nockenelements der Welle betätigbar sind.

5. Verteilerventileinrichtung nach Anspruch 3 oder 4,
**dadurch gekennzeichnet,**
**dass** die erste Ventilanordnung (37, 65, 88) und/oder die zweite Ventilanordnung (42) auf einer Kaltseite (26, 40) des Temperierelements (17, 34, 35) oder einer Warmseite (27, 41) des Temperierelements angeordnet ist.

6. Verteilerventileinrichtung nach einem der Ansprüche 3 bis 5,
**dadurch gekennzeichnet,**
**dass** die erste Ventilanordnung (37, 65, 88) und die zweite Ventilanordnung (42) modular ausgebildet sind.

7. Verteilerventileinrichtung nach einem der Ansprüche 2 bis 6,
**dadurch gekennzeichnet,**
**dass** die Ventile (38, 39, 43, 44, 67, 93) bei Anordnung der Verteilerventileinrichtung (25, 36, 64) an der Welle (63) sternförmig um die Welle herum und/oder linear entlang der Welle angeordnet sind.

8. Verteilerventileinrichtung nach einem der vorangehenden Ansprüche, **dadurch gekennzeichnet,**
**dass** die Verteilerventileinrichtung (25, 36, 64) zumindest ein das Ventil (38, 39, 43, 44, 67, 93) aufnehmendes Gehäuse (66, 92) aufweist.

9. Verteilerventileinrichtung nach Anspruch 8,
**dadurch gekennzeichnet,**
**dass** das Gehäuse (66, 92), vorzugsweise axialseitig, einen Fluideinlass (101) für das Wärmeträgerfluid aufweist.

10. Verteilerventileinrichtung nach einem der vorangehenden Ansprüche,
**dadurch gekennzeichnet,**
**dass** das Ventil (38, 39, 43, 44, 67, 93) einen, vorzugsweise senkrecht zu der Welle (63), vorzugsweise entgegen einer Rückstellkraft eines Federelements (96) des Ventils, bewegbaren Kolben (70, 91), vorzugsweise mit einer einstellbaren Kolbenlänge, aufweist.

11. Verteilerventileinrichtung nach einem der vorangehenden Ansprüche,
**dadurch gekennzeichnet,**
**dass** das Ventil (38, 39, 43, 44, 67, 93) einen Ventildeckel (99) aufweist, welcher einen Fluidauslass (100) für das Wärmeträgerfluid aufweist.

12. Temperiervorrichtung (10, 32, 58), insbesondere magnetokalorische Kühlvorrichtung, wobei die Temperiervorrichtung mit einem Stator (11) und einem relativ zu dem Stator drehbar gelagerten Rotor (12) ausgebildet ist, wobei die Temperiervorrichtung eine Temperiereinrichtung (16, 33, 59) aufweist, wobei die Temperiereinrichtung zumindest ein mit einem Wärmeträgerfluid durchströmbares Temperierelement (17, 34, 35) mit einem magnetisierbaren Material aufweist, wobei die Temperiervorrichtung eine Magnetfeldeinrichtung (14) aufweist, wobei die Temperiereinrichtung in einem Magnetfeld der Magnetfeldeinrichtung zumindest teilweise angeordnet ist, wobei die Magnetfeldeinrichtung relativ zu der Temperiereinrichtung drehbar ist, derart, dass das Magnetfeld an dem Temperierelement zur Veränderung einer Magnetisierung des Materials variierbar ist, wobei infolge einer Erhöhung der Magnetisierung eine Temperatur des Materials erhöhbar und infolge einer Verminderung der Magnetisierung die Temperatur verminderbar ist, wobei das Temperierelement mit dem Wärmeträgerfluid unter thermischer Kontaktierung des Materials zu einer Wärmeabfuhr aus dem Material und/oder zu einer Wärmezufuhr zu dem Material durchströmbar ist, wobei die Temperiervorrichtung eine Verteilerventileinrichtung (25, 36, 64) nach einem der vorangehenden Ansprüche aufweist, wobei die Temperiervorrichtung eine Welle (63) mit zumindest einem Nockenelement (68, 89) zur mechanischen Betätigung des zumindest eines Ventils (38, 39, 43, 44, 67, 93) der Verteilerventileinrichtung aufweist.

13. Temperiervorrichtung nach Anspruch 12,
**dadurch gekennzeichnet,**
**dass** der Rotor (12) die Welle (63) umfasst oder dass die Welle an eine Rotorwelle gekoppelt ist.

14. Temperiervorrichtung nach Anspruch 12 oder 13,
**dadurch gekennzeichnet,**
**dass** das Material das Temperierelement ausbildet.

15. Temperiervorrichtung nach einem der Ansprüche 12 bis 14,
**dadurch gekennzeichnet,**
**dass** die Temperiervorrichtung (10, 32, 58) ein Fluidsystem (49) aufweist, wobei das Fluidsystem einen Fluidkreislauf (50) mit einer Fördereinrichtung (51) zur Zirkulation des Wärmeträgerfluids und einen kalten Wärmeübertrager (52) zur Wärmezufuhr zu dem Wärmeträgerfluid und/oder einen warmen Wärmeübertrager (53) zur Wärmeabfuhr von dem Wärmeträgerfluid aufweist.

16. Temperiervorrichtung nach einem der Ansprüche 12 bis 15,
**dadurch gekennzeichnet,**
**dass** die Temperiervorrichtung (10, 32, 58) eine Antriebsanordnung zur Drehung des Rotors (12) aufweist.

17. Temperiervorrichtung nach einem der Ansprüche 12 bis 16,
**dadurch gekennzeichnet,**
**dass** der Rotor (12) die Magnetfeldeinrichtung (14) und der Stator (11) die Temperiereinrichtung (16, 33, 59) umfasst.

18. Temperiervorrichtung nach einem der Ansprüche 12 bis 17,
**dadurch gekennzeichnet,**
**dass** die Temperiereinrichtung (16, 33, 59) als eine Buchse (18) ausgebildet ist, wobei die Magnetfeldeinrichtung (14) relativ zu der Buchse koaxial innerhalb und/oder außerhalb der Buchse angeordnet ist, wobei die Magnetfeldeinrichtung durch zumindest einen Permanentmagnet (15) oder Elektromagnet ausgebildet ist.

19. Verfahren zum Betrieb einer Temperiervorrichtung (10, 32, 58), insbesondere magnetokalorische Kühlvorrichtung, wobei ein Rotor (12) der Temperiervorrichtung relativ zu einem Stator (11) der Temperiervorrichtung gedreht wird, wobei zumindest ein ein magnetisierbares Material aufweisendes Temperierelement (17, 34, 35) einer Temperiereinrichtung (16, 33, 59) der Temperiervorrichtung mit einem Wärmeträgerfluid durchströmt wird, wobei die Temperiereinrichtung in einem Magnetfeld einer Magnetfeldeinrichtung (14) der Temperiervorrichtung zumindest teilweise angeordnet wird, wobei die Magnetfeldeinrichtung relativ zu der Temperiereinrichtung gedreht wird, derart, dass das Magnetfeld an dem Temperierelement zur Veränderung einer Magnetisierung des Materials variiert wird, wobei infolge einer Erhöhung der Magnetisierung eine Temperatur des Materials erhöht und infolge einer Verminderung der Magnetisierung die Temperatur vermindert wird, wobei das Temperierelement mit dem Wärmeträgerfluid unter thermischer Kontaktierung des Materials zu einer Wärmeabfuhr aus dem Material und/oder zu einer Wärmezufuhr zu dem Material durchströmt wird, wobei das Durchströmen des Temperierelements mit dem Wärmeträgerfluid mittels einer Verteilerventileinrichtung (25, 36, 64) der Temperiervorrichtung auf die Magnetisierung zeitlich abgestimmt gesteuert wird,
**dadurch gekennzeichnet,**
**dass** zumindest ein dem Temperierelement zugeordnetes Ventil (38, 39, 43, 44, 67, 93) der Verteilerventileinrichtung mittels zumindest eines Nockenelements (68, 89) einer Welle (63) der Temperiervorrichtung mechanisch betätigt wird.

20. Verfahren nach Anspruch 19,
**dadurch gekennzeichnet,**
**dass** das Ventil (38, 39, 43, 44, 67, 93) durch die Betätigung des Ventils aus einer Sperrstellung des Ventils, in welcher ein das Ventil und das Temperierelement (17, 34, 35) durchgreifender Fluidweg (45, 46, 47, 48) für das Wärmeträgerfluid gesperrt ist, in eine Öffnungsstellung des Ventils, in welcher der Fluidweg für das Wärmeträgerfluid geöffnet ist, überführt wird.

21. Verfahren nach Anspruch 20,
**dadurch gekennzeichnet,**
**dass** mittels des Ventils (38, 39, 43, 44, 67, 93) das Durchströmen zu der Wärmeabfuhr aus dem Material gesteuert wird, wobei der Fluidweg (45, 47) vor oder bei einem Erreichen einer maximalen Magnetisierung geöffnet und bei oder nach einem Beginn einer der maximalen Magnetisierung nachfolgenden Verminderung der Magnetisierung für das Wärmeträgerfluid gesperrt wird oder dass mittels des Ventils das Durchströmen zu der Wärmezufuhr zu dem Material gesteuert wird, wobei der Fluidweg (46, 48) vor oder bei einem Erreichen einer minimalen Magnetisierung geöffnet und bei oder nach einem Beginn einer der minimalen Magnetisierung nachfolgenden Erhöhung der Magnetisierung für das Wärmeträgerfluid gesperrt wird.

22. Verfahren nach einem der Ansprüche 19 bis 21,
**dadurch gekennzeichnet,**
**dass** das Durchströmen zu der Wärmeabfuhr aus dem Material mittels zumindest eines, vorzugsweise eine erste Ventilanordnung (37, 65, 88) bildenden, dem Temperierelement (17, 34, 35) zugeordneten ersten Ventils (38, 39, 67, 93) der Verteilerventileinrichtung (25, 36, 64) und das Durchströmen zu der Wärmezufuhr zu dem Material mittels zumindest eines, vorzugsweise eine zweite Ventilanordnung (42) bildenden, dem Temperierelement zugeordneten zweiten Ventils (43, 44) der Verteilerventileinrichtung gesteuert wird, wobei das erste Ventil während einer Betätigung des zweiten Ventils nicht betätigt und das zweite Ventil während einer Betätigung des ersten Ventils nicht betätigt wird, derart, dass das Temperierelement mit dem Wärmeträgerfluid alternierend zu der Wärmeabfuhr aus dem Material und zu der Wärmezufuhr zu dem Material durchströmt wird.

23. Verwendung einer Verteilerventileinrichtung (25, 36, 64) zur auf eine Magnetisierung eines magnetisierbaren Materials zumindest eines Temperierelements (17, 34, 35) einer Temperiereinrichtung (16, 33, 59) einer Temperiervorrichtung (10, 32, 58), insbesondere magnetokalorische Kühlvorrichtung, zeitlich abgestimmten Steuerung eines Durchströmens des Temperierelements mit einem Wärmeträgerfluid, wobei die Temperiervorrichtung mit einem Stator (11) und einem relativ zu dem Stator drehbar gelagerten Rotor (12) ausgebildet ist, wobei die Temperiervorrichtung eine Magnetfeldeinrichtung (14) aufweist, wobei die Temperiereinrichtung in einem Magnetfeld der Magnetfeldeinrichtung zumindest teilweise angeordnet ist, wobei die Magnetfeldeinrichtung relativ zu der Temperiereinrichtung drehbar ist, derart, dass das Magnetfeld an dem Temperierelement zur Veränderung der Magnetisierung variierbar ist, wobei infolge einer Erhöhung der Magnetisierung eine Temperatur des Materials erhöhbar und infolge einer Verminderung der Magnetisierung die Temperatur verminderbar ist, wobei das Temperierelement mit dem Wärmeträgerfluid unter thermischer Kontaktierung des Materials zu einer Wärmeabfuhr aus dem Material und/oder zu einer Wärmezufuhr zu dem Material durchströmbar ist, wobei die Verteilerventileinrichtung zumindest ein dem Temperierelement zugeordnetes Ventil (38, 39, 43, 44, 67, 93) aufweist,
**dadurch gekennzeichnet,**
**dass** das Ventil mittels zumindest eines Nockenelements (68, 89) einer Welle (63) mechanisch betätigbar ist.
